# EUROPEAN PATENT SPECIFICATION

(11) **EP 1 633 681 B1**
(45) Date of publication and mention of the grant of the patent: **20.03.2013**
(21) Application number: 04734177.1
(22) Date of filing: 21.05.2004
(51) Int. Cl.: C02F 1/46, C02F 1/36, C02F 1/467

(54) **A SWIMMING POOL CLEANING AND SANITISING SYSTEM**
SCHWIMMBADREINIGUNGS- UND -DESINFEKTIONSSYSTEM
SYSTEME DE DESINFECTION ET DE NETTOYAGE DE PISCINE

(30) Priority: 23.05.2003 AU 2003902540
(43) Date of publication of application: 15.03.2006
(73) Proprietor: Enviro Swim Pty Ltd ACN 106 998 967, Southport QLD 4215 (AU)
(72) Inventor: JONES, Philip, Henry, Tallai, Queensland 4213 (AU); STUTT, Gary, Arthur, Unit 29, Robina, Queensland 4226 (AU)
(74) Representative: Larsen, Hans Ole
(86) International application number: PCT/AU2004/000681
(87) International publication number: WO 2004/103912

(56) References cited:
- WO-A1-02/062709
- WO-A2-97/11908
- DE-A1- 19 951 461
- DE-A1- 19 951 461
- US-A1- 2003 164 308
- US-B1- 6 238 546
- DATABASE WPI Derwent Publications Ltd., London, GB; Class D15, AN 1996-220362, XP008100438 & RU 2 043 974 C1 (DNEPR MECH ENG WORKS PRODN ASSOC) 20 September 1995

## Description

### Field of the Invention.

The present invention relates to swimming pools, spas & water features and in particular to a method and apparatus for improving the cleaning and sanitising of the water contained in swimming pools, spas & water features.

### Background Art.

The cleaning and sterilization of swimming pools is currently accomplished using any one or more of mechanisms such as salt water chlorination or chlorine addition.

US 6238546 B1 discloses apparatus for the treatment of effluent including a chamber having an inlet and an outlet, a plurality of plate-type electrodes and an electrical supply connected to the electrodes. The plurality of plate-type electrodes define a plurality of channels extending within the chamber. Each of the plurality of channels occurs between adjacent electrodes. The plurality of electrodes are positioned between the inlet and the outlet. The electrical supply delivers electricity of a first polarity to a first set of a plurality of electrodes. The electrical supply delivers electricity of an opposite polarity to the second set of electrodes. The apparatus also comprises an ultrasonic device for treating the effluent with ultrasound.

Chlorine is a strong bleach. It is dangerous. Side effects of its use can include red, irritated eyes, dried and brittle hair, swimmer's ear, bleached out swimsuits, dry itchy skin, and a clinging odour of chlorine.

Chlorine absorbs through the skin. Studies have linked chlorine with cancer, high blood pressure, anaemia, heart disease, hardening of the arteries, senility, stroke and other degenerative diseases. Scientists have reported that chlorine is a leading cause for the erosion of the earth's ozone layer. It only occurs naturally safely wrapped up in compounds which are relatively unreactive.

Some of the problems associated with using chlorine have been discussed in literature sources such as:
1. A,ggazzotti, G., Fantuzzi, G., Right, E., & Predieri, G. (1998). Blood and breath analyses as biological indicators of exposure to trihalomethanes in indoor swimming pools. Science of the Total Environment, 217, 155-163,
2. Lindstrom, A.B., Pleil, J.D., & Berkoff, D.C. (1997). Alveolar breath sampling and analysis to assess trihalomethane exposures during competitive swimming training. Environmental Health Perspectives, 105(6), 636-642. and
3. Drobnic, F., Freixa, A., Casan, P., Sanchis, J., & Guardino, X. (1996). Assessment of chlorine exposure in swimmers during training. Medicine and Science in Sports and Exercise, 28(2), 271-274.

Salt water chlorination is a particularly popular technique in which salt (pure, natural rock salt) is dissolved in pool water and then subjected to simple electrolysis. This electrolysis usually takes place in an in-line electrolysis cell. The chloride portion of the salt (sodium chloride) is transformed during the electrolysis into an effective sanitizer, hypochlorous acid, (HOC1) which has the ability to oxidize (kill) bacteria, virus, algae and other such radicals which would otherwise flourish in the water. This process is reversible, so does not consume the salt, which is simply used over and over again.

HOC1 is the same effective sanitizer as would result if 'pool chlorine' was added to the water - but is utilised to minimise the potentially dangerous chlorine compounds and the obnoxious 'chemical' effects commonly associated with manual chlorination - and without the need to handle chemicals. It does not always achieve this aim.

Oxidation normally takes place in a swimming pool where the water and its associated contaminants are affected by a chemical oxidizer added to the water and used to oxidize oils and body fats. The chemical oxidizers increase the Oxidation Reduction Potential (ORP) of the water in the pool, but they also have their disadvantages. Oxidation Reduction Potential (ORP) is the extent to which a chemical ion exchanges electrons, which lead to electrical charges, during a chemical reaction.

Chemical oxidisers are quite expensive as they must be continually purchased and added to the water. They are also known to have serious health issues regarding toxicity of chemicals & proven toxic side effects of the by-products which include Chloramines, Trihalomethanes and Ozone.

Ionisation is an alternative method used in the sanitizing of swimming pools. Ionisation produces copper ions (algaecide) and silver ions (bactericide) into the water flow of the swimming pools. Ionisation is not as effective as a stand-alone treatment for a swimming pool as it requires the addition of an oxidiser in order to be effective. One major benefit of ionization is its residual qualities. The copper and silver ions are not affected by heat or ultraviolet light and will remain in the water effective as a sanitizer for weeks after the system is shut down. Unlike chlorine and ozone, the copper/silver ions are not considered toxic at the levels required to sanitize the water.

The modem ioniser consists of two parts; the electrode assembly consisting of two (or multiples of two) bars of metal usually made of an alloy of copper and silver and the electronic control unit. The electrodes are usually installed in the swimming pool's filtration system. The control unit supplies the necessary extra low voltage across the electrodes. The resultant current produces positively charged ions of the constituent metals which are carried into the pool and become part of the chemistry of the pool water.

Silver ions act as a disinfectant and copper ions act as an algicide. Although these ions kill algae and bacteria and provide a measurable residual quality, they do require an oxidiser to be present for the oxidation of organic wastes. Most manufacturers recommend the use of chlorine, but non-chlorine chemical oxidisers are also available.

Ozone is one of the most effective disinfectants and oxidisers available and once introduced into the water it starts to work immediately, killing bacteria and oxidising organic waste. As ozone is not highly soluble in water, the ozone must be injected into the water by either a compressor or venturi system.

However, as ozone is also toxic, all traces must be used or removed prior to a person using the pool. As there can be no residual of ozone when the pool is used, some other form of residual sanitiser like chlorine or bromine must also be used in order to provide continuous protection when the ozone generator is turned off.

Ultrasonics is also used to clean surfaces remove existing scale, prevent scale formation and assist in sanitizing the water in the swimming pool by helping to break down the protective shell of most common parasitic organisms. Ultrasonic cleaning is a result of sound waves introduced into the water by means of a series of coils wrapped around a pipe that is part of the filtration circuit. The sound travels through the pipe carrying the water and creates waves of compression and expansion in the liquid. In the compression wave, the molecules of the fluid are compressed together tightly. Conversely, in the expansion wave, the molecules are forced apart, creating microscopic bubbles. The bubbles only exist for a split second and contain a partial vacuum while they exist.

As the pressure of the bubbles increases, the fluid around the bubble rushes in, collapsing the bubbles rapidly. When this occurs, a jet of liquid is created that may travel very quickly. They rise in temperature to as high as 5000 degrees Celsius. This extreme temperature, combined with the velocity of the liquid jet provides an intense cleaning action in a minute area. Due to the very short duration of the bubble expansion and collapse cycle, the liquid surrounding the bubble quickly absorbs the heat and the area cools quickly.

Potential problems in ultrasonic cleaning exist if the set point of any one or more of cleaning cycle time, temperature, chemistry, proximity to the transducer, ultrasonic output frequency, watts per litre or the volume of the liquid being cleaned is not correctly adjusted.

Traditional ultrasound technology is currently applied to the processing of low volumes and flow rates, typically in the range of 60-100 gallons per minute.

Each of the above systems has advantages and disadvantages. The inventors of the present invention have found that ionisation on its own has an excellent residual but requires addition of an oxidiser, generally requiring the addition of chemicals or ozonation to prevent the build up of debris on pool surfaces and the oxidisation of oils and body fats.

Ultrasonics on its own will prevent the build up of scale on pool surfaces and fitting and the reduction of parasitic growth.

Electronic Oxidisation on its own would have to operate constantly to maintain the residual disinfection in the body of the pool water making it uneconomical in the domestic a commercial environment.

The inventors of the present invention found that the three processes working together complement each other and combine to be an excellent system in providing the required sanitising processes without the addition of chemicals or ozone to achieve oxidisation.

### Summary of the Invention.

The present invention is directed to a swimming pool cleaning and sanitation system, which may at least partially overcome the abovementioned disadvantages or provide the consumer with a useful or commercial choice.

In one form, the invention resides in an in-line cleaning and sanitation apparatus for cleaning a liquid contained in a body of liquid by removing a portion of the liquid from the body, cleaning and sanitising the liquid portion and returning the portion to the body of liquid, the apparatus comprising
a. At least two separate electrolytic cells, including an electrolytic ionization cell to release ions having an algaecidal and/or bactericidal effect into the liquid and an electrolytic oxidation cell to increase the oxidation/reduction potential of the liquid, and
b. at least one ultrasonic cleaning means to introduce sound waves into the liquid,
wherein the electrolytic cells are provided in the order of electrolytic oxidation cell and electrolytic ionization cell and the ultrasonic cleaning means mounted there between when seen in the flow direction and wherein the ionization cell, the ultrasonic cleaning means and the electrolytic oxidation cell are configured to operate simultaneously for a period to clean and sanitize the liquid in the absence of added salt, chlorine, ozone or other oxidation promoting chemicals.

In another form, the invention resides in cleaning and sanitation method for cleaning a liquid contained in a body of liquid by removing a portion of the liquid from the body, cleaning and sanitising the liquid portion and returning the portion to the body of liquid comprising the steps of
a. providing an electrolytic ionization cell to produce ions having an algaecidal or bactericidal effect into the liquid,
b. providing at least one ultrasonic cleaning means to introduce sound waves into the liquid,
c. providing an electrolytic oxidation cell to increase the oxidation reduction potential of the liquid,
   wherein the electrolytic cells are provided in the order of electrolytic oxidation cell and electrolytic ionization cell with the ultrasonic cleaning means mounted there between when seen in the flow direction and, and
d. operating the electrolytic ionization cell, the ultrasonic cleaning means and the electronic oxidation cell simultaneously for a period to clean and sanitise the liquid in the absence of added salt, chlorine, ozone or other oxidation promoting chemicals.

According to a particularly preferred embodiment, the ionisation means may comprise two parts; an electrode assembly and an electronic control unit. The electrode assembly may preferably comprise two (or multiples of two) bars of metal, an anode and a cathode, at least one usually made of an alloy of copper and silver, According to a particularly preferred embodiment, the ionisation rods may each be an alloy of copper. A preferred composition of the alloy is 85% copper, 10% zinc and 5% silver.

The ionisation, means may generally be installed in the swimming pool's filtration system. The ionisation means may preferably produce or introduce ions having an algaecidal (copper ions) or bactericidal (silver ions) into the liquid.

The control unit may preferably supply the necessary extra low voltage across the electrodes. The resultant current may produce positively charged ions of the constituent metals which are then carried into the pool and become part of the chemistry of the pool water. The input power to the controller may suitably be 110-250 volts at a frequency of approximately 50-60 hertz. It is preferred that the output power from the control unit is a 5 to 12 volt direct current at a maximum current of approximately 10 amperes which is transmitted to the rods. According to a particularly preferred embodiment, the power may be supplied to the ionisation rods at a level of about 90 milliamps and 5 volts of direct current.

According to a particularly preferred embodiment, the anode and cathode of the ionisation means as utilised in a domestic application such as a swimming pool may be approximately 25mm in diameter and 100 mn in length. They are positioned approximately 15 mm apart. It is to be appreciated that in commercial applications which are generally larger in scale than domestic applications, larger rods may be preferred. A greater or lesser number of rods may be used in a commercial application.

The control unit may be connected to a power supply preferably through a timer. The control unit may suitably be associated with a circulation pump for circulating the water through the pool and/ or the system in such a manner that the ionisation means is only operable when the circulation pump is activated.

As with a general electrolysis cell, the anode and the cathode may be sacrificial members. In order to prolong the lifespan of the rods, reduce debris build-up on the rods and minimise uneven wear to the rods, the polarity of the rods may be reversed periodically. The polarity may be reversed about each five to six minutes of operation for this purpose.

The silver and copper ions created by the ionisation means may preferably act to maintain the conductivity of the water without the addition of chemicals, particularly chlorine and also without the operation of a salt water chlorination device.

It is to be appreciated however that any ionisation means may be used according to the invention.

Any ultrasonic means may preferably be utilized according to the invention. The ultrasonic means may be configured to the particular type of liquid to be treated by adjustment of any of the following parameters: flow rate through the ultrasonic means, volume of liquid to be treated, the level of cleanliness of the liquid initially or that required after treatment, liquid temperature or make-up for example pH.

More than one ultrasonic cleaning stage may preferably be required. The cleaning process may be enhanced through the use of agitation of the water in the pipes although it should be realized that the force provided by the pump moving the water through the system may agitate the water sufficiently.

According to a particularly preferred embodiment, the ultrasonic means may comprise a power supply connected to power source. The ultrasonic means may further comprise two aerials. The aerials may take the form of elongate members or wires. The aerials may preferably be wires approximately 2.5 mm in diameter.

The aerials are suitably wrapped about the pipe through which the liquid to be cleaned flows. The two aerials may be wound about the pipe starting from the same point on the pipe. Generally a minimum of seven revolutions may be required for the ultrasonic means to function optimally. It is preferred that each of the aerials revolve in opposed directions about the pipe, one in a clockwise direction and one in a counter-clockwise direction. The distance between each revolution may suitably be approximately 75 mm.

The power supply preferably creates a modulating ultrasonic field around the aerials, the field ranging in frequency from 50 to 80000 hertz. According to a particularly preferred embodiment, the power supply supplies a signal a variable frequency to each of the aerials. Preferably, the signal frequency is variable from approximately 15 kilohertz and increased by 2 kilohertz over each two minute period. When a frequency of 71 kilohertz is reached, the frequency is dropped to 15 kilohertz and the cycle may be repeated.

The ultrasonic means may be effective in converting salts and other solid material particularly calcium and silica based materials into an argonite material. Generally, salts and solids treated by ultrasonics may remain in the argonite form for up to 10 days.

A system according to the present invention operates in an in-line configuration, the actual wattage used may preferably be calculated on the basis of watts per liter per unit of time.

The electronic oxidation means may preferably take the form of a conventional electrolysis apparatus. The source of the voltage may be a low voltage, direct current electricity source. A higher voltage may not be needed as the conductivity in the water is heightened due to the addition of copper and silver ions created or introduced by the ionization means. Suitably an AC current is converted to a 25 ampere, 12 volt DC supply to the electrodes. Alternatively, a 15 ampere, 24 volts DC current may be used. The power supply may switch the polarity of the electrodes each twelve hour or twenty four hour period of operation in order to prolong the life of the electrodes.

In a particularly preferred embodiment, the application of a voltage across the electrodes in the electronic oxidation means may suitably increase the Oxidation Reduction Potential (ORP). The amount of change in the ORP may be dependent upon the voltage applied at the electrodes and the surface area of the electrodes.

A preferred embodiment of the invention utilizes at least one coated steel electrode. The electrode may suitably be coated with an alloy of semi-precious metal, such as titanium or platinum.

The increase in ORP usually requires a level of Total Dissolved Solids in the water of between 500 to 800 ppm. The conductivity of the water treated according to the present invention is increased due to the operation of the ionisation means and thus oxidation may be obtainable at lower levels of Total dissolved Solids due to the increased levels of ions in solution. Without the ionisation means, the ORP may not be affected at lower levels of Total Dissolved Solids.

The system may preferably additionally comprise testing equipment to monitor the available parameters of the water and or swimming pool. The testing equipment may preferably continually sample the pool water.

Control means may also be provided for each element in the system, and/or the system as a whole. The operation of the elements may overlap at least partially. It is preferred that the operation of the elements, including their start and finish time (if any), be controlled by the system control means. The control means may initiate a cleaning element's cleaning cycle, time the cycle, and shut down the element at the completion of the cleaning cycle.

The system according to the present invention may operate in at least a partially "in-line" formation whereby a portion of water is removed from the pool, treated by one or all of the cleaning processes, and then reintroduced into the pool. This type of system is common in the filtration of water in pools, spas and water features. According to an aspect of the present invention, the ionization means, the ultrasonic means and the electronic oxidation means may be located in the pipe work associated with a conventional in-line filtration system. It is also preferred that the elements of the present invention are located on the discharge side of any pump means provided to move the water through the system. The flow rate of water through the system may preferably be between 150 L/min and 300 L/min for domestic applications.

The system may operate continuously. One or more timers may also be provided.

According to a particularly preferred configuration, the apparatus of the present invention may be configured as two separate but interconnected physical components. The first component may suitably be the power supply/control means for the apparatus. The power supply/control means may also house the electronics associated with the apparatus within a pressure rated enclosure.

The enclosure may suitably be mounted adjacent but spaced from a standard 230-240 volt AC electrical power outlet and the swimming pool filter and pump.

The first component and in particular the power supply will generally be connectable to the electrical power outlet. The power supply may be associated with a 24 hour, 7 day timer in order to allow the operator of the apparatus to set the function and operation of the system and apparatus according to individual pool requirements.

The second component of the apparatus may be the ionisation, oxidizing and ultrasonic chamber. This chamber will generally be plumbed into the pipe work of the pool filtration system between the pool filter and the return to the pool. The second component will be connected to the first component via at least electrical connections.

The second component may comprise an electronic oxidizing chamber and an ionisation chamber in order after the pool filter with the ultrasonic aerials located between the respective chambers. Thus the water to be treated passes through the apparatus and system in the following order: electronic oxidizing chamber, pipe with ultrasonic aerials and the ionisation chamber.

### Brief Description of the Drawings.

Various embodiments of the invention will be described with reference to the following drawings, in which:

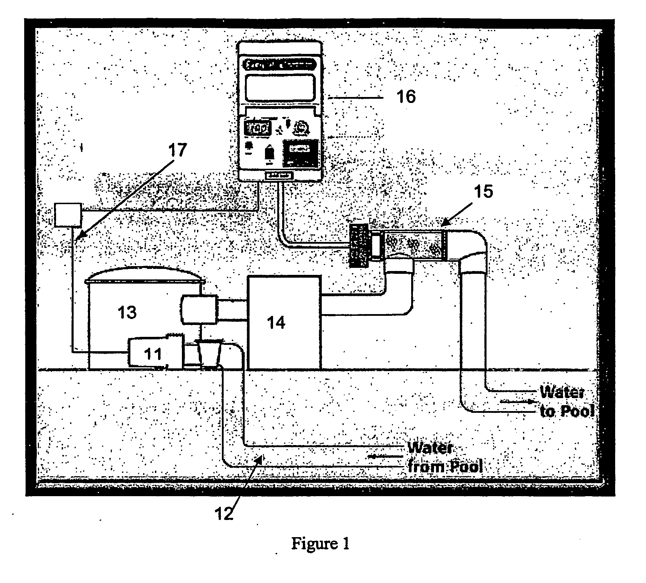

Figure 1 illustrates a schematic view of a prior art continuous salt water chlorinator to illustrate the in-line nature of the system.

### Detailed Description of the Invention.

According to an embodiment of the invention, a swimming pool cleaning and sterilisation apparatus is provided.

A prior art in-line cleaning system is illustrated in Figure 1. A system such as the one illustrated in Figure 1 may incorporate the ionisation means and the electronic oxidation means according to the present invention. Alternatively, a system such as the one illustrated in Figure 1 will have the electrolysis cell replaced with an ionisation means, an ultrasonic cleaning means and an electronic oxidation means.

As can be seen from Figure 1, water from the pool enters the system and is moved around the system by a pump 11. The pump moves the water from the intake pipe 12 into a filter 13. The filter 13 is designed to remove material such as undissolved particulates, leaves or sticks, from the liquid stream.

The water may then proceed through a heater 14 or similar apparatus, if the pool is a heated type pool. The heating may also take place to attain the optimum treatment conditions for the water.

From the heater 14, the water proceeds through an electrolytic cell 15. The cell 15 as illustrated, is generally used according to the salt water chlorination process. As stated above, the electrolysis cell in Figure 1 will be replaced with an ionisation means, an ultrasonic cleaning means and an electronic oxidation means.

From the electrolysis cell 15, the water proceeds back to the pool. The system is controlled by a control system 16 which generally houses the power pack as well. The system is fitted with a timer 17 to control the cycle time. The electrolysis cell 15 and the filter 13 are connected to the same power source.

The cleaning elements may be operated at the same time or in any preset order of operation.

The electronic oxidation means according to the invention operates to increase the oxidation reduction potential of the pool water.

Many chemical reactions take place when electrons are transferred from one material to another. In each case, one material is reduced by the addition of one or more electrons, while losing the same electrons oxidizes the other material. Therefore, the electrons that are available from the oxidized substance are added to the reduced material until an equilibrium condition is reached.

The size of an atom or ion and the number of electrons found in the outer electron shell determines the tendency of different materials to lose electrons. This is also known as the relative oxidation potentials of a particular material. The arbitrary standard for the potentials is the hydrogen electrode. The state of the reaction is then measured by the potential developed between an inert, noble metal electrode and a reference electrode.

The measuring electrode for ORP is usually gold or platinum. The noble metal donates and accepts electrons. The electrode acquires the electrochemical potential of the electrons, relative to the strongest redox equilibrium of the solution being measured. The electrode develops a voltage relative to the state of the reaction. In a particularly preferred embodiment, both of the electrodes in the electrolysis cell may be manufactured from titanium or be at least titanium coated.

The reference electrode is the same electrode that is used for pH measurement, The ORP measurement becomes dependent on pH when the reaction involves hydrogen ions.

The system of the present invention operates with the ionization means and the electronic oxidation means in an in-line formation and the ultrasonic aerials are positioned in an in-line configuration as well.

The ionisation means comprises two rods of copper and silver alloy located in a clear plastic housing. The rods in domestic applications are approximately 25mm in diameter and 100mm in length and are positioned approximately 15mm apart. The housing is plumbed into the pipe work of the in-line filtration system on the discharge side of the filter or pump prior to returning the water to the pool.

The average flow rate with the pumps available for this application is between 150lts/min to 300lts/min.

The ionisation means power supply is connected to the domestic power supply preferably through a timer. The ionisation means power supply has a piggyback plug and the filtration systems circulating pump is plugged into the piggy back plug so the ionisation means only runs with the pump in operation.

The power supply converts 240 volts AC to the required power supplies for each of the respective components of the apparatus. For the ionisation chamber, the power is supplied at 200 milliamps and approximately 5 volts DC, and for the electronic oxidation chamber, the power is supplied at 15 amps and approximately 24 volts DC.

This low voltage DC power is connected to the copper and silver rods in the housing associated with the return pipe to the pool.

The polarity at the rods is reversed approximately every 6 minutes to allow even wear on the rods and prevent debris build up.

In the ultrasonic means, the power supply is connected to the domestic power source. Two aerials extend from the power supply. These aerials are wrapped around the pipe work of the system to be treated. A minimum of seven revolutions is required. One aerial revolves clockwise from the center and the other, anti-clockwise, the distance between the revolutions being approximately 75mm.

The power supply, when operating, creates a modulating ultrasonic field around the aerials, which ranges between 50 Hz to 80,000 Hz. The power supply supplies a signal a variable frequency to each of the aerials. The signal frequency starts at approximately 15 kilohertz and increases by 2 kilohertz over each two minute period. When a frequency of 71 kilohertz is reached, the frequency drops to 15 kilohertz and repeats the above process.

Salts and solids are difficult to remove from water. These salts and solids easily precipitate out as scale on all surfaces within the circulating pipe work and devices within the system. These salts and solids are perfect for mollusks and parasites to use as building blocks for proliferation.

The ultrasonic means does not remove these salts and solids, but rather affects them at molecular levels. Calcium or silica molecules are very easily adhered to each other and precipitate out as scale on surfaces within the wet side of pool systems. The higher the level of this particulate the more scale which will occur.

Mollusks and parasites use these salts as building material for their growth and consequently they are present in a system having high levels of these salts and solids.

Ultrasonics adapts these salts and solids from the snowflake-like molecule, to a long thin brittle argonite molecule. This molecule has great difficulty adhering to surfaces or other materials and consequently scale build-up is reduced and existing scale is broken down and removed. Mollusks protective shells are also weakened and the sanitiser (created by the ionisation means) is more easily able to penetrate the weakened shell and the mollusk or parasite is killed. New parasites or mollusks have difficulty surviving in the system as their protective barrier obtained from the calcium or silica is now unable to bond and therefore they cannot proliferate.

In use, the electronic oxidation means uses multiple amounts of steel plates coated with an alloy of semi-precious metals placed in a poly vinyl chloride (PVC) cell plumbed into the filtration circuit of the system. The electronic oxidation means operates on the principle of electrolysis with a cathode and an anode plate system. An AC/DC power supply allows production of approximately 15 ampere output at 24 volts of DC current. This power supply switches polarity approximately every 24 hours of operation.

When the system is operated the Oxygen Reduction Potential (ORP) of the water is increased. The amount of ORP generated is dependent on the voltage applied at the titanium plates and the surface area of the plates.

Conductivity in the water is increased and the oxidisation is obtainable at lower Total Dissolved Solids due to the levels of copper and silver ions in the water.

A preferred form of the apparatus of the present invention is configured as two separate but interconnected physical components. The first component comprises the power supply/control means for the apparatus. The power supply/control means also houses the electronics associated with the apparatus within a pressure rated enclosure.

The enclosure is mounted adjacent to, but spaced from a standard 230-240 volt AC electrical power outlet and the swimming pool filter and pump.

The power supply will be connectable to the electrical power outlet. The power supply is associated with a 24 hour, 7 day timer in order to allow the operator of the apparatus to set the function and operation of the system and apparatus according to individual pool requirements.

The second component of the apparatus comprises the ionisation, oxidizing and ultrasonic chamber. This chamber is plumbed into the pipe work of the pool filtration system between the pool filter and the return to the pool. The second component is connected to the first component via at least electrical connections.

The second component comprises an electronic oxidizing chamber and an ionisation chamber in order after the pool filter with the ultrasonic aerials located between the respective chambers. Thus the water to be treated passes through the apparatus and system in the following order: electronic oxidizing chamber, pipe with ultrasonic aerials and the ionisation chamber.

A particular embodiment of the invention is described in the Experimental Report included as ANNEX 1 and forming part of the specification.

In the present specification and claims, the word "comprising" and its derivatives including "comprises" and "comprise" include each of the stated integers but does not exclude the inclusion of one or more further integers.

### ANNEX

### Introduction

Copper and silver ionisation of water has become an emerging method for disinfection in both swimming and spa pools. WaterTech Services International Pty Ltd has developed a new disinfection system incorporating copper and silver ionisation which they have operating in both public and private swimming/spa pools in Queensland.

Our laboratory was approached to do some efficacy testing to determine the system's ability to disinfect spa pool water. Guidelines for measuring the efficacy of a disinfection system have been drawn up by the NSW Health Department ("Treated Water Public Swimming Pools and Spa Pools New Disinfection Process Criteria"). The guideline requires a 4 log reduction in *Pseudomonas aeruginosa* within 30 seconds of exposure to the disinfection system.

As well as an indicator of how well a disinfection process is performing *P. aeruginosa* can be an important human pathogen being a common cause of pool folliculitis. Patients can present with pruritic follicular, maculopapular, vesicular, or pustular lesions on any part of the body that was immersed in water. Pseudomonal bacteremia produces distinctive skin lesions known as ecthyma gangrenosum. With eye infections, the physical examination reveals lid edema, conjunctival erythema and chemosis, and severe mucopurulent discharge adherent to an underlying corneal ulcer. *P. aeruginosa* is the predominant bacterial pathogen in some cases of external otitis including "swimmer's ear". The bacterium is infrequently found in the normal ear, but often inhabits the external auditory canal in association with injury, maceration, inflammation, or simply wet and humid conditions.

*Pseudomonas* is a gram-negative rod belonging to the family Pseudomonadaceae. Its optimum temperature for growth is 37 degrees, and it is able to grow at temperatures as high as 42 degrees. A spa pool provides an ideal environment for *Pseudomonas,* with more than 62% of random cultures showing some positive growth. Human infection is facilitated by dilatation of the pores and superhydration of the stratum corneum due to the high temperature (Baruchin *et al.* 1996)

### Methods and Materials

Two identical spa pools (AAIM QLD Aust.) each with a capacity of 1,500l were filled with town water (see attached report for typical analysis) and the pool filters left on auto to dissipate the chlorine out of the water (chlorine checked using HACH 2010 spectrophotometer, method 80).

The design of the trial was to have one spa pool the control (untreated) and the other spa pool will have the Enviroswim system (treated). Alkalinity Increaser (Jacks Pool Shop), Hydrochloric acid (BDH, AR) and Sodium chloride (BDH, AR) were added in equal quantities to both spa pools to ensuring that similar and balanced water quality conditions.

The following parameters were recorded for both spas: Conductivity, pH and temperature using a calibrated hand held meter (TPS MC-81). Alkalinity was measured using the titration method (APHA 2320B). Copper and Silver levels were analysed by AA graphite furnace. In addition, TDS and ORP were recorded in the treated spa using in line meters (Milwaukee SM 402 and SM 500 respectively).

The Enviroswim system was switched on prior to inoculation and long enough to establish the desired Oxidation Reduction Potential (ORP) levels for each particular trial (see results below).

For inoculation of spas, a colony of *P*. *aeruginosa* (ACM 495) on Nutrient agar was aseptically transferred to 100ml of Tryptone Soy Broth and incubated for 24 hrs at 35C. The resulting inoculum was diluted to 2 litres (Schott bottle) of water taken from Spa A just prior to inoculation. Once thoroughly mixed in the Schott bottle, this was the final inoculum which was added to each spa in equal 800 ml portions so as to establish initial levels of *P*. *aeruginosa* at around of 10⁶ cfu /100ml.

When the 800 ml of inoculum was added to a spa, a timer was started and at the same time the auxiliary pump was activated for 30 sec to provide better mixing than just the circulating pump. Previous trials have established that there is sufficient mixing in 30 secs.

After 30 sec, samples were taken from the spa and the auxiliary pump turned off, with just the circulating pump left on. Further samples were taken at different times to establish levels of reduction in *P. aeruginosa* over time. All samples were taken in 500m sterile bacteriological jars with sodium thiosulphate (Techno-Plas) and processed immediately using the membrane filtration method (APHA 9213E) with mPA-C agar (Amyl). Plates were incubated at 41.5C for 72 hrs and then counted and reported as *P. aeruginosa* cfu/100ml*.*

### Results

### Trial on 4/2/04

Chlorine in both spas prior to the start of trial was <0.01 mg/l total chlorine.

The water chemistry parameters were recorded for the two Spas 5 min following inoculation and presented in Table 1.

**Table 1 - Water Chemistry in Spa Pools.**

| **Spa** | **pH** | **Conductivity uS/cm** | **Temperature °C** | **Alkalinity mg/l** |
|---|---|---|---|---|
| Untreated Spa | 7.1 | 895 | 24 | 85 |
| Enviro-Swim Spa | 7.0 | 880 | 24 | 80 |

The results for the counts of *P. aeruginosa* and the levels of ORP, Copper and Silver in the two Spa pools is presented in Table 2.

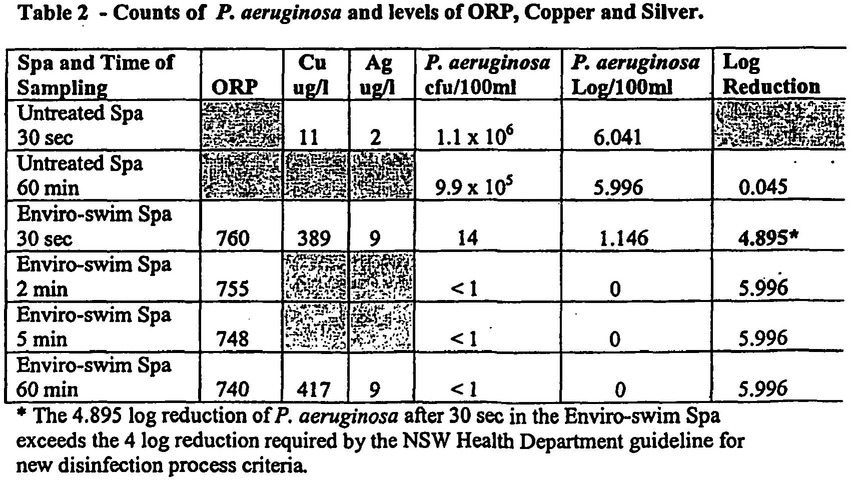

### Pseudomonas aeruginosa Disinfection In Spa Pools

### Trial on 24/2/04

Chlorine in both spas prior to the start of trial was <0.01 mg/l total chlorine.

The water chemistry parameters were recorded for the two Spas 5 min following inoculation and presented in Table 3.

**Table 3 - Water Chemistry in Spa Pools.**

| **Spa** | **PH** | **Conductivity uS/cm** | **Temperature °C** | **Alkalinity mg/l** |
|---|---|---|---|---|
| Untreated Spa | 7.1 | 770 | 35 | 68 |
| Enviro-Swim Spa | 7.0 | 900 | 35 | 74 |

The results for the counts of *P. aeruginosa* and the levels of ORP, Copper and Silver in the two Spa pools is presented in Table 4.

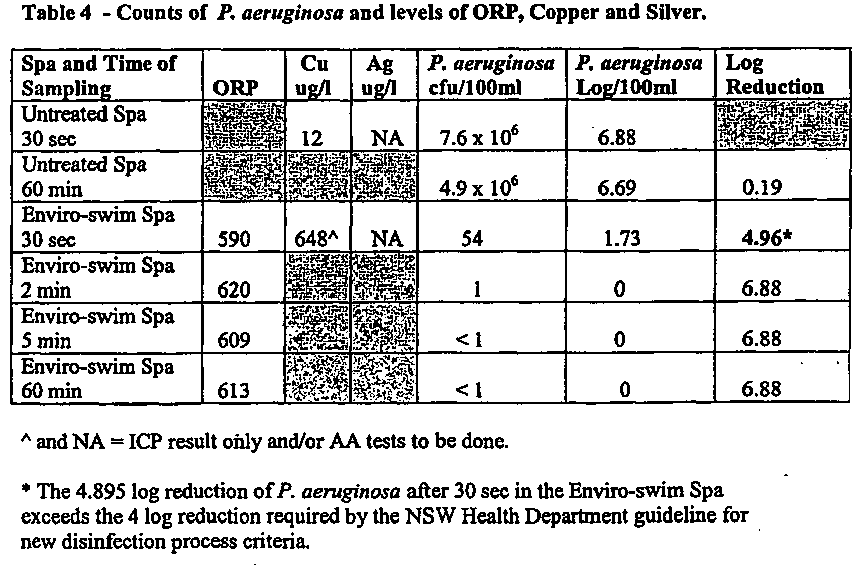

### References

Baruchin, A.N.; Shapira, A.; Scharf, S. and Rosenberg, L. (1996) Pseudomonas folliculitis acquired from hot tubs and whirlpools: an overview. Annals of Burns and Fire Disasters Volume IX no. 4.
Beer, C.; Guilmartin, L.E.; McLoughlin, T.F. and White, T.J. (1999) Swimming pool disinfection - Efficacy of copper silver ions with reduced chlorine levels. Journal of Environmental Health 61: 9-12
NSW Health Department 'Treated Water Public Swimming Pools and Spa Pools - New Disinfection Process Criteria'.
NSW Health Department June 1996. Public Swimming Pool and Spa Pool Guidelines.
Queensland Health February 2000. Queensland Health Swimming and Spa Pool Water Quality and Operational Guidelines.

## Claims

1. An in-line cleaning and sanitation apparatus for cleaning a liquid contained in a body of liquid by removing a portion of the liquid from the body, cleaning and sanitising the liquid portion and returning the portion to the body of liquid, the apparatus comprising
a. two separate electrolytic cells, including an electrolytic ionization cell to release ions having an algaecidal and/or bactericidal effect into the liquid and an electrolytic oxidation cell to increase the oxidation/reduction potential of the liquid, and
b. at least one ultrasonic cleaning means to introduce sound waves into the liquid,
wherein the electrolytic cells are provided in the order of electrolytic oxidation cell and electrolytic ionization cell and the ultrasonic cleaning means mounted there between when seen in the flow direction and wherein the ionization cell, the ultrasonic cleaning means and the electrolytic oxidation cell are configured to operate simultaneously for a period to clean and sanitize the liquid in the absence of added salt, chlorine, ozone or other oxidation promoting chemicals.

2. The apparatus according to claim 1 wherein the electrolytic ionisation cell comprises at least two parts, an electrode assembly and an electronic control unit, the electrode assembly comprising at least an anode and a cathode, at least one made of an alloy of copper and silver.
2. The apparatus according to claim 2 wherein the composition of the alloy is 85% copper, 10% zinc and 5% silver.

3. The apparatus according to claim 2 wherein the power supply for the electrolytic ionization cell is configured to reverse the polarity of the electrode rods periodically.

4. The apparatus according to claim 1 wherein the ultrasonic means comprises at least two aerials, wrapped about a pipe through which the liquid to be cleaned flows, the two aerials wound about the pipe starting from the same point on the pipe, each of the aerials revolving in opposed directions about the pipe, one in a clockwise direction and one in a counter-clockwise direction, the distance between each revolution being approximately 75 mm.

5. The apparatus according to claim 5 wherein a power supply is capable of supplying a signal of variable frequency to each of the aerials.

6. The apparatus according to claim 6 wherein the variable signal frequency ranges from approximately 15 kilohertz with an increase of 2 kilohertz over each two minute period, up to 71 kilohertz in a cyclus.

7. The apparatus according to claim 1 wherein the elements of the apparatus are at least in a partially "in-line" formation in a liquid treatment loop for a filtration system of a swimming pool.

8. A cleaning and sanitation method for cleaning a liquid contained in a body of liquid by removing a portion of the liquid from the body, cleaning and sanitising the liquid portion and returning the portion to the body of liquid comprising the steps of
a. providing an electrolytic ionization cell to produce ions having an algaecidal or bactericidal effect into the liquid,
b. providing at least one ultrasonic cleaning means to introduce sound waves into the liquid,
c. providing an electrolytic oxidation cell to increase the oxidation reduction potential of the liquid,
wherein the electrolytic cells are provided in the order of electrolytic oxidation cell and electrolytic ionization cell with the ultrasonic cleaning means mounted there between when seen in the flow direction, and
d. operating the electrolytic ionization cell, the ultrasonic cleaning means and the electronic oxidation cell simultaneously for a period to clean and sanitise the liquid in the absence of added salt, chlorine, ozone or other oxidation promoting chemicals.

## Patentansprüche

1. Eine In-Reihe-Reinigungs-und-Sanierungs-Vorrichtung zum Reinigen einer Flüssigkeit, welche in einem Flüssigkeitskörper enthalten ist, durch Entnehmen einer Menge der Flüssigkeit aus dem Körper, Reinigen und Sanieren der Flüssigkeitsmenge und Zurückführen der Menge zum Flüssigkeitskörper, wobei die Vorrichtung aufweist:
a.zwei separate elektrolytische Zellen, umfassend eine elektrolytische Ionisierungszelle, um Ionen mit einer algiziden und/oder bakteriziden Wirkung in die Flüssigkeit freizugeben, und eine elektrolytische Oxidationszelle, um das Oxidations-/Reduktionspotenzial der Flüssigkeit zu steigern, und
b. mindestens ein Ultraschall-Reinigungsmittel, um Schallwellen in die Flüssigkeit einzubringen,
wobei die elektrolytischen Zellen in der Reihenfolge elektrolytische Oxidatzonszelle und elektrolytische Ionisierungszelle bereitgestellt sind und das Ultraschall-Reinigungsmittel dazwischen angebracht ist, in Flussrichtung gesehen, und wobei die Ionisierungszelle, das Ultraschall-Reinigungsmittel und die elektrolytische Oxidationszelle konfiguriert sind, um für eine Zeitdauer gleichzeitig in Betrieb zu sein, um die Flüssigkeit in Abwesenheit von zugegebenem Salz, Chlor, Ozon oder anderen oxidationsfördernden Chemikalien zu reinigen und sanieren.

2. Die Vorrichtung gemäß Anspruch 1, wobei die elektrolytische Ionisierungszelle mindestens zwei Teile, eine Elektrodenanordnung und eine elektronische Steuerungseinheit, aufweist, wobei die Elektrodenanordnung mindestens eine Anode und eine Kathode aufweist, wobei mindestens eine aus einer Legierung aus Kupfer und Silber gemacht ist.
2. Die Vorrichtung gemäß Anspruch 2, wobei die Zusammensetzung der Legierung 85 % Kupfer, 10 % Zink und 5 % Silber beträgt.

3. Die Vorrichtung gemäß Anspruch 2, wobei die Stromversorgung für die elektrolytische Ionisierungszelle konfiguriert ist, um die Polarität der Elektrodenstäbe periodisch umzukehren.

4. Die Vorrichtung gemäß Anspruch 1, wobei das Ultraschallmittel mindestens zwei Antennen aufweist, welche um ein Rohr gewickelt sind, durch welches die zu reinigende Flüssigkeit fließt, wobei die zwei Antennen ausgehend von demselben Punkt an dem Rohr um das Rohr gewickelt sind, wobei jede der Antennen das Rohr in entgegengesetzten Richtungen umläuft, eine im Uhrzeigersinn und eine entgegen dem Uhrzeigersinn, wobei die Distanz zwischen jedem Umlauf etwa 75 mm beträgt.

5. Die Vorrichtung gemäß Anspruch 5, wobei eine Stromversorgung fähig ist, jede der Antennen mit einem Signal variabler Frequenz zu versorgen.

6. Die Vorrichtung gemäß Anspruch 6, wobei die variable Signalfrequenz von etwa 15 Kilohertz, bei einer Zunahme von 2 Kilohertz während jeder Zeitdauer von zwei Minuten, bis zu 71 Kilohertz in einem Zyklus reicht.

7. Die Vorrichtung gemäß Anspruch 1, wobei die Elemente der Vorrichtung in einem Flüssigkeitsaufbereitungskreislauf für ein Filtersystem eines Swimmingpools zumindest in einer teilweisen "In-Reihe"-Formation sind.

8. Ein Reinigungs-und-Sanierungs-Verfahren zum Reinigen einer Flüssigkeit, welche in einem Flüssigkeitskörper enthalten ist, durch Entnehmen einer Menge der Flüssigkeit aus dem Körper, Reinigen und Sanieren der Flüssigkeitsmenge und Zurückführen der Menge zum Flüssigkeitskörper, aufweisend die Schritte:
a. Bereitstellen einer elektrolytischen Ionisierungszelle, um Ionen mit einer algiziden oder bakteriziden Wirkung in der Flüssigkeit zu erzeugen,
b. Bereitstellen mindestens eines Ultraschall-Reinigungsmittels, um Schallwellen in die Flüssigkeit einzubringen,
c. Bereitstellen einer elektrolytischen Oxidationszelle, um das Oxidationsreduktionspotenzial der Flüssigkeit zu steigern,
wobei die elektrolytischen Zellen in der Reihenfolge elektrolytische Oxidationszelle und elektrolytische Ionisierungszelle bereitgestellt sind und das Ultraschall-Reinigungsmittel dazwischen angebracht ist, in Flussrichtung betrachtet, und
d. Betrieb der elektrolytischen Ionisierungszelle, des Ultraschall-Reinigungsmittels und der elektronischen Oxidationszelle gleichzeitig für eine Zeitdauer, um die Flüssigkeit in Abwesenheit von zugegebenem Salz, Chlor, Ozon oder anderen oxidationsfördernden Chemikalien zu reinigen und zu sanieren.

## Revendications

1. Appareil de nettoyage et d'assainissement en ligne pour nettoyer un liquide contenu dans une masse de liquide en retirant une portion du liquide de la masse, nettoyant et assainissant la portion de liquide et renvoyant la portion à la masse de liquide, l'appareil comprenant :
a. deux cellule électrolytiques séparées, incluant une cellule d'ionisation électrolytique pour libérer des ions ayant un effet algicide et/ou bactéricide dans le liquide et une cellule d'oxydation électrolytique pour augmenter le potentiel d'oxydoréduction du liquide, et
b. au moins des moyens de nettoyage par ultrasons pour introduire des ondes sonores dans le liquide,
dans lequel les cellules électrolytiques sont fournies dans l'ordre de la cellule d'oxydation électrolytique et de la cellule d'ionisation électrolytique et les moyens de nettoyage par ultrasons montés entre celles-ci lorsque vus dans la direction d'écoulement et dans lequel la cellule d'ionisation, les moyens de nettoyage par ultrasons et la cellule d'oxydation électrolytique sont configurés pour fonctionner simultanément pendant une période pour nettoyer et assainir le liquide en l'absence de sel, de chlore, d'ozone ou d'autres produits chimiques favorisant l'oxydation, ajoutés.

2. Appareil selon la revendication 1, dans lequel la cellule d'ionisation électrolytique comprend au moins deux parties, un ensemble d'électrodes et une unité de commande électronique, l'ensemble d'électrodes comprenant au moins une anode et une cathode, au moins une étant constituée d'un alliage de cuivre et d'argent.
2. Appareil selon la revendication 2, dans lequel la composition de l'alliage est 85 % de cuivre, 10 % de zinc et 5 % d'argent.

3. Appareil selon la revendication 2, dans lequel l'alimentation électrique de la cellule d'ionisation électrolytique est configurée pour inverser périodiquement la polarité des tiges d'électrode.

4. Appareil selon la revendication 1, dans lequel les moyens à ultrasons comprennent au moins deux antennes, enroullées autour d'un conduit à travers lequel le liquide à nettoyer s'écoule, les deux antennes enroulées autour du conduit débutant à partir du même point sur le conduit, chacune des antennes tournant dans des sens opposés autour du tuyau, l'une dans un sens horaire et l'une dans un sens anti-horaire, la distance entre chaque étant d'approximativement 75 mm.

5. Appareil selon la revendication 5, dans lequel une alimentation électrique est capable de fournir un signal de fréquence variable à chacune des antennes.

6. Appareil selon la revendication 6, dans lequel la fréquence de signal variable varie d'approximativement 15 kilohertz avec une augmentation de 2 kilohertz sur chaque période de deux minutes, jusqu'à 71 kilohertz sur un cycle.

7. Appareil selon la revendication 1, dans lequel les éléments de l'appareil sont au moins dans une formation partiellement "en ligne" dans une boucle de traitement de liquide pour un système de filtration d'une piscine.

8. Procédé de nettoyage et d'assainissement pour nettoyer un liquide contenu dans une masse de liquide en retirant une portion du liquide de la masse, nettoyant et assainissant la portion de liquide et renvoyant la portion à la masse de liquide, comprenant les étapes suivantes :
a. fournir une cellule d'ionisation électrolytique pour produire des ions ayant un effet algicide ou bactéricide dans le liquide,
b. fournir au moins des moyens de nettoyage par ultrasons pour introduire des ondes sonores dans le liquide,
c. fournir une cellule d'oxydation électrolytique pour augmenter le potentiel d'oxydoréduction du liquide,
dans lequel les cellules électrolytiques sont fournies dans l'ordre de la cellule d'oxydation électrolytique et de la cellule d'ionisation électrolytique avec les moyens de nettoyage par ultrasons montés entre celles-ci lorsque vus dans la direction d'écoulement, et
d. faire fonctionner la cellule d'ionisation électrolytique, les moyens de nettoyage par ultrasons et la cellule d'oxydation électrolytique simultanément pendant une période pour nettoyer et assainir le liquide en l'absence de sel, de chlore, d'ozone et d'autres produits chimiques favorisant l'oxydation, ajoutés.
